# EUROPEAN PATENT APPLICATION

(11) **EP 2 236 231 A1**
(43) Date of publication of application: **06.10.2010**
(21) Application number: 08873650.9
(22) Date of filing: 18.11.2008
(51) Int. Cl.: B23B 51/06, B23B 51/00

(54) **GUN DRILL**

(30) Priority: 25.03.2008 JP 2008077207
(71) Applicant: UNITAC, Incorporated, Amagasaki-shi, Hyogo 661-0033 (JP)
(72) Inventor: NOMURA, Takuji, Amagasaki-shi Hyogo 661-0033 (JP)
(74) Representative: Vossius & Partner
(86) International application number: PCT/JP2008/070907
(87) International publication number: WO 2009/118947

(57) **Abstract**

A gun drill having a cutting blade of a single-edged blade in which high cutting efficiency is attained, exact positional accuracy is not required at the time of brazing a cutting blade tip as the cutting blade, a cutting head can be manufactured easily and the cutting blade itself is also easily processed in terms of form is provided. A cutting blade 5 is configured such that an inner end 51a of a blade edge 51 is spaced apart from a head shaft center O to form a non-cutting zone Z in the vicinity of the shaft center O, a cutting blade side face 52 at the inner end 51a side constitutes an inclined surface inclined from the inner end 51a to the head shaft center O side, and a non-cutting core C of a work material W generated in the non-cutting zone Z is broken off by press-contact of the inclined cutting blade side face 52 during cutting processing.

## Description

### [Technical Field]

The present invention relates to a gun drill used for deep-hole drilling work.

### [Background Art]

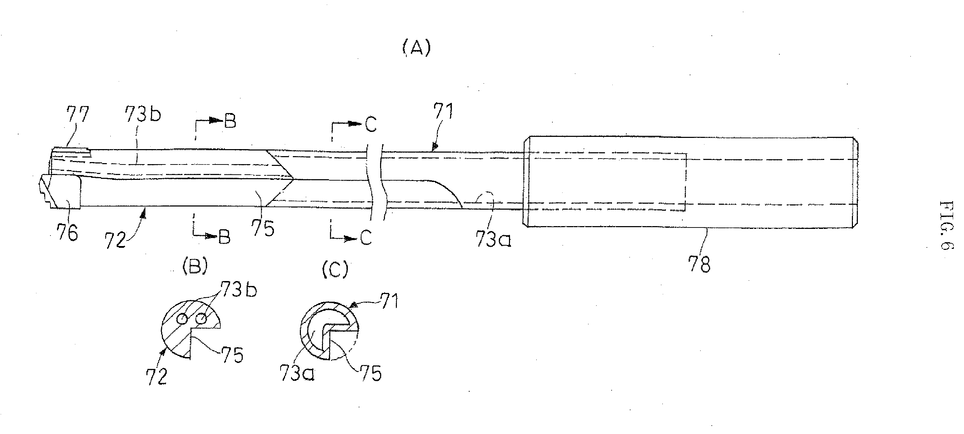

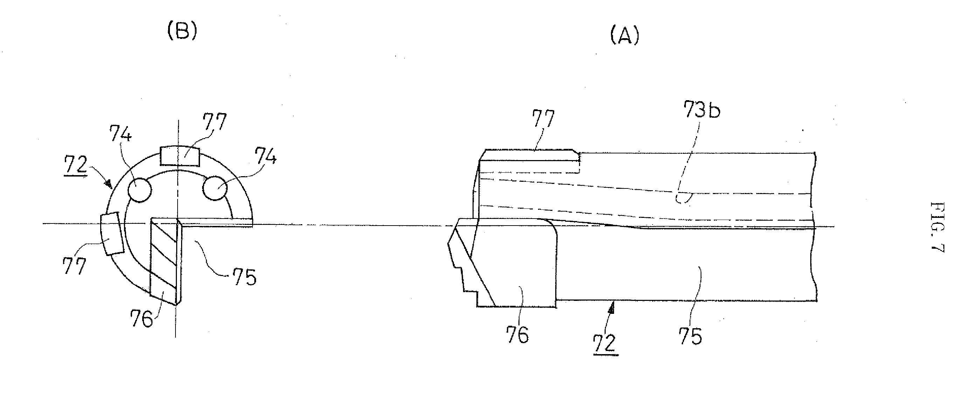

As a deep-hole drilling work system, various systems such as a gun drill system, an ejector system (double tube system), a single tube system, etc., have been known, and the gun drill system is suitable for deep-hole drilling work of a small diameter. More specifically, as shown, for example, in FIG. 6 and FIG. 7, the gun drill system generally adopts a gun drill having a cutting head 72 which is provided at a distal end of a hollow tool shank 71 of a two-thirds to three-quarters circle in cross section and has the same cross-sectional outline. The gun drill carries out cutting while supplying a coolant, which is supplied through coolant supply passages 73a, 73b within the tool shank 71 and cutting head 72, from coolant discharge ports 74 at a distal end surface of the head to a cutting region, and also discharges cutting chips, which are generated in line with the cutting, to the exterior together with the coolant through a cross-sectionally V-shaped cutting chip discharge groove 75 extending along the lengthwise direction of an outer circumference of the tool shank 71. In addition to that a large passage cross-sectional area of the cutting chip discharge groove 75 can be secured even with a small diameter, a coolant feed pressure is determined by a tool length and there is no need to increase the feed pressure even when a cutting hole becomes deep. Accordingly, the gun drill system is suitable for deep-hole drillingwork of a small diameter (Patent Document 1). In FIG. 6 and FIG. 7, reference numeral 76 denotes a cutting blade tip bordering, brazed to and fixed with the cutting chip discharge groove 75 at the distal end portion of the cutting head 72, reference numeral 77 denotes a guide pad brazed to and fixed with a distal end side of an outer circumferential portion away from the cutting chip discharge groove 75 of the cutting head 72, and reference numeral 78 denotes a large-diameter cylindrical driver into which a proximal end portion of the tool shank 71 is inserted, fitted and fixed.

In order to cut and form the whole of a cutting hole in deep-hole drilling work including this gun drill system, a center side cutting blade (cutting blade itself in the case of a single-edged blade) of the cutting head is required to be configured precisely such that a blade edge matches with a radial line about a head shaft center and also an inner end of the blade edge is arranged slightly beyond the head shaft center. Therefore, a cutting speed becomes zero theoretically at the head shaft center during cutting processing, and thus, a blade point portion positioned in the shaft center does not exert a cutting force at what is called a chisel edge, which results in crushing a work material, and thrust resistance is loaded. As a result, this has been a factor that cutting efficiency cannot be enhanced. Further, in a gun drill configured such that a cutting blade tip is brazed to a recessed portion of a head main body side, a brazing material intervenes at a fitting portion of the both, so that high precision assembly has been difficult.

Consequently, as for a deep-hole drilling work tool employing a screw clamping type throw away tip as a cutting blade, the present inventor has already proposed one configured such that a sinking portion is provided to a tip side face at a cutting blade inner end side, and the cutting blade inner end is arranged spaced apart from the head shaft center, thereby forming a non-cutting zone in the vicinity of the shaft center and breaking off a non-cutting core of a work material generated in the non-cutting zone by press-contacting with an inclined step of the sinking portion (Patent Documents 2 and 3).
Patent Document 1: Japanese Published Unexamined Patent Application No. 2004-130413
Patent Document 2: Japanese Published Unexamined Patent Application No. 2003-25129
Patent Document 3: Japanese Published Unexamined Patent Application No. 2003-236713

### [Disclosure of the Invention]

### [Problems to be Solved by the Invention]

However, the cutting head of the gun drill has a cross section of a two-thirds to three-quarters circle due to the cutting chip discharge groove on the outer circumference, and additionally, the coolant supply passages are provided inside. Thus, there is no room to form the afore-described throw away tip screw clamping structure within a cross sectional area of a thickness portion. In particular, the throw away tip has not been able to be applied when a tool diameter is small. Further, when a sinking portion is provided to the cutting blade side face and the inner end of the cutting blade is arranged spaced apart from the head shaft center as in the afore-described throw away tip, there has been concern that the non-cutting core generated in the shaft center position easily grows linearly to a position of contacting with the inclined step, whereupon a break-off size is enlarged and cutting chip discharge performance is reduced. Moreover, the cutting blade itself disadvantageously involves a great deal of trouble in processing and its manufacturing costs become expensive due to forming of the sinking portion on the side face and the inclined step.

The present invention was made in view of the foregoing circumstances, and accordingly it is an object of the present invention to provide a gun drill particularly having a cutting blade of a single-edged blade in which high cutting efficiency can be achieved, and exact positional accuracy is not required when a cutting blade tip is brazed as the cutting blade, manufacturing of a cutting head is facilitated accordingly, and the cutting blade itself is also easily processed in terms of form.

### [Means for Solving the Problems]

Means for achieving the aforementioned object will be described with reference numerals of the accompanying drawings. A gun drill according to a first aspect of the present invention includes a tool shank 1, a cutting head 2 mounted at a distal end portion of the tool shank 1, coolant supply passages 3a, 3b provided inside the tool shank 1 and the cutting head 2 and communicating with both 1 and 2, a coolant discharge port 24 opened at the cutting head 2 and communicating with the coolant supply passages 3a, 3b, and a lengthwise direction cutting chip discharge groove 4 formed on an outer circumferential surface extending from a proximal side of the tool shank 1 to the cutting head distal end, and a cutting blade 5 of a single-edged blade provided at the distal end of the cutting head 2 and bordering the cutting chip discharge groove 4, wherein the cutting blade 5 is such that a blade edge 51 thereof has an inner end 51a spaced apart from a head shaft center O and forming a non-cutting zone Z in the vicinity of the shaft center O and a cutting blade side face 52 at the inner end 51a side constitutes an inclined surface inclined from the inner end 51a to the head shaft center O side, and a non-cutting core C of a work material W generated in the non-cutting zone Z is broken off by press-contact of the inclined cutting blade side face 52 during cutting processing.

A second aspect of the present invention is configured such that the cutting blade 5 has the cutting blade side face 52 at the inner end 51a side forming an angle of 75 to 90 degrees with respect to a cutting blade front face 53 in the gun drill of the first aspect as described above.

A third aspect of the present invention is configured such that the inner end 51a of the blade edge 51 is spaced 0.05 to 0.5 mm apart from the head shaft center O and an inclination angle θ of the cutting blade side face 52 with respect to the head shaft center O is 5 to 30 degrees in the gun drill of the first aspect as described above.

A fourth aspect of the present invention is configured such that the blade edge 51 of the cutting blade 5 is arranged in parallel with a radial line R about the head shaft center O and in a center-raised position 0.2 to 1.5 mm more forward in a cutting rotation direction than the radial line R in the gun drill of the first aspect as described above.

A fifth aspect of the present invention is configured such that the cutting blade 5 is composed of a cutting blade tip 50 brazed to a recessed portion 21a provided to the cutting head 2 in the gun drill of the first aspect as described above.

A sixth aspect of the present invention is configured such that a guide pad 6 is provided in a position on the opposite side of the cutting blade 5 side on an outer circumferential surface 2c of the cutting head 2 and the whole of the blade edge 51 of the cutting blade 5 is highly inclined toward the head shaft center O side in the gun drill of any one of the first to the fifth aspects as described above.

### [Effects of the Invention]

Effects of the present invention will be described with reference numerals of the drawings. First, in the gun drill according to the first aspect of the present invention, the inner end 51a of the blade edge 51 of the cutting blade 5 is spaced apart from the head shaft center O. Consequently, a non-cutting zone Z is formed in the vicinity of the shaft center O and a non-cutting core C of a work material W is generated in the non-cutting zone Z during deep-hole drilling work. However, the cutting blade side face 52 at the inner end 51a side of the blade edge 51 constitutes an inclined surface inclined from the inner end 51a to the head shaft center O side. Therefore, the non-cutting core C is forcibly pushed away laterally by press-contact of the inclined cutting blade side face 52 and is broken off in such a manner as being twisted in line with rotation of the cutting head 2. Thus, the inclination of the cutting blade side face 52 increases the degree of lateral displacement from the head shaft center O as the non-cutting core C becomes longer. As a result, the non-cutting core C is efficiently fragmented little by little without growing long, whereupon excellent cutting chip discharge performance is secured, and high cutting efficiency is attained in cooperation with an elimination of the chisel edge in the shaft center position. On the other hand, as for the cutting blade 5 itself, the cutting blade side face 52 thereof has only to be a simple inclined surface, so that its manufacturing can be carried out easily, and at a low cost.

According to the second aspect of the present invention, the cutting blade side face 52 at the inner end 51a side of the cutting blade 5 forms an angle in a specific range with respect to the cutting blade front face 53. Consequently, lateral displacement of the non-cutting core C by press-contact of the cutting blade side face 52 becomes larger, and fragmentation performance of the non-cutting core C is increased accordingly, while strength of a blade point at the inner end 51a side of the blade edge 51 is increased and the blade point is hard to chip, whereupon durability of the cutting blade 5 is improved.

According to the third aspect of the present invention, the inner end 51a of the blade edge 51 is spaced apart in a specific range from the head shaft center O, and an inclination angle θ of the cutting blade side face 52 with respect to the head shaft center O is in a specific range. Consequently, the non-cutting core C is reliably broken off little by little at an appropriate diameter.

According to the fourth aspect of the present invention, the blade edge 51 of the cutting blade 5 is arranged in an appropriate center-raised position, so that the little by little break-off of the non-cutting core C is carried out more reliably.

According to the fifth aspect of the present invention, the cutting blade 5 is composed of the cutting blade tip 50 brazed to the recessed portion 21a provided to the cutting head 2, but the blade edge 51 of the cutting blade 5 does not need to be made in agreement with the radial line R passing through the head shaft center O. Additionally, the inner end 51a of the blade edge 51 has only to be spaced apart appropriately from the head shaft center O, too. Therefore, exact positional accuracy at the time of brazing the cutting blade tip 50 is not required, and the manufacturing of the cutting head 2 is facilitated accordingly.

According to the sixth aspect of the present invention, a guide pad 6 is provided in a position on the opposite side of the cutting blade 5 side on the outer circumferential surface 2c of the cutting head 2, and the whole of the blade edge 51 of the cutting blade 5 is highly inclined toward the head shaft center O side, so that the radial force of the cutting reaction force is directed to the opposite side of the cutting blade 5 side and acts in such a manner as pressing the guide pad 6 on the opposite side of the cutting blade 5 against an inner circumference of the cutting hole H. Thus, drilling accuracy of the cutting hole H is improved.

### [Brief Description of the Drawings]

FIG. 1 shows a cutting head side of a gun drill according to one embodiment of the present invention, and FIG. 1A is a front view and FIG. 1B is a side view;
FIG. 2 is a side view of the cutting head side of the gun drill viewed from a different direction;
FIG. 3 is a longitudinal cross-sectional front view showing a state of deep-hole drilling work by the gun drill;
FIG. 4 is a longitudinal cross-sectional side view showing a behavior of a cutting central portion in the deep-hole drilling work;
FIG. 5 is a plan view showing the behavior of the cutting central portion;
FIG. 6 shows a configuration example of a conventional gun drill, and FIG. 6A is a side view of the whole, FIG. 6B is a cross-sectional view taken along arrow B-B in FIG. 6A, and FIG. 6C is a cross-sectional view taken along arrow C-C in FIG. 6A; and
FIG. 7 shows a cutting head side of the conventional gun drill in an enlarged manner, FIG. 7A is a side view and FIG. 7B is a front view.

### [Description of Reference Numerals]

- 1:: Tool shank
- 2:: Cutting head
- 2b:: Distal end surface
- 2c:: Outer circumferential surface
- 20:: Head main body
- 21a:: Recessed portion
- 23:: Coolant lead-out port
- 24:: Coolant discharge port
- 3a, 3b:: Coolant supply passage
- 4:: Cutting chip discharge groove
- 5:: Cutting blade
- 50:: Cutting blade tip
- 51:: Blade edge
- 51a:: Inner end
- 52:: Cutting blade side face
- 53:: Cutting blade front face
- 6:: Guide pad
- H:: Cutting hole
- O:: Head shaft center
- R:: Radial line
- Z:: Non-cutting zone
- θ:: Inclination angle
- f:: Distance (center-raised amount)
- s:: Distance (eccentric distance)

### [Best Mode for Carrying Out the Invention]

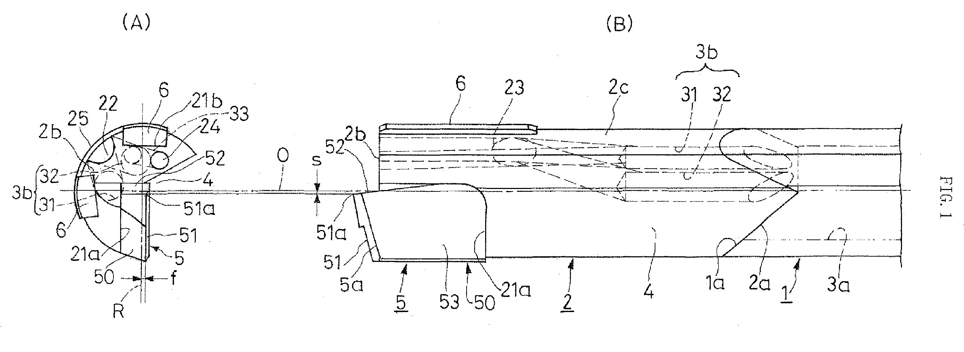

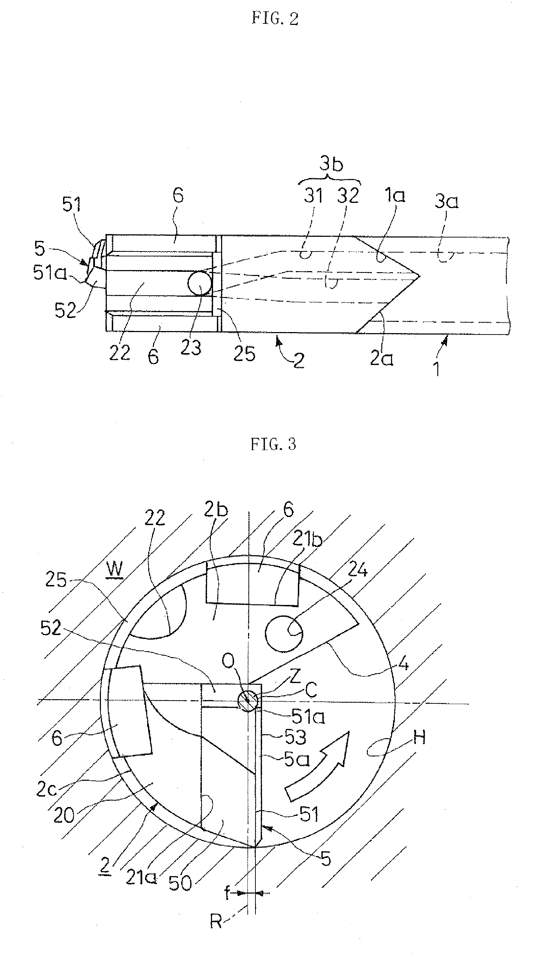

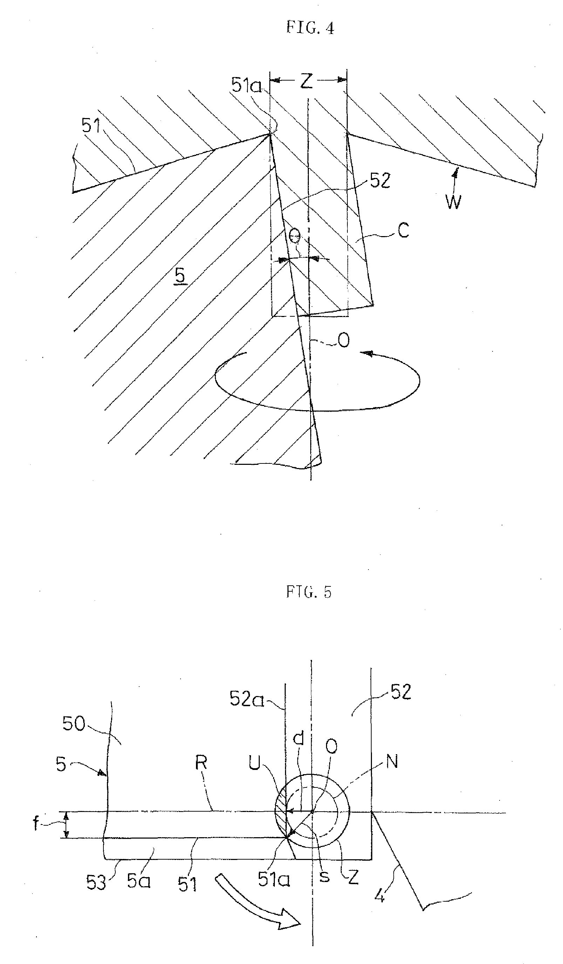

Hereinafter, an embodiment of a gun drill according to the present invention will be described in detail with reference to the drawings. FIG. 1 shows a side and a front of a cutting head side of a gun drill of the embodiment, FIG. 2 shows a side of the cutting head side of the gun drill viewed from a different direction, FIG. 3 shows a state of deep-hole drilling work by the gun drill, and FIG. 4 and FIG. 5 show a behavior of a cutting central portion in the deep-hole drilling work, respectively.

As shown in FIG. 1, a gun drill of this embodiment is composed of an elongated tool shank 1 made of a pipe material such as steel and having a distal end 1a cut in a V-shape, a cutting head 2 having a proximal end 2a cut in a corresponding inverted V-shape (mountain-shape) and brazed to the distal end 1a to be concentrically coupled. The gun drill also includes one lengthwise direction linear cutting chip discharge groove 4 on an outer circumferential surface extending from a proximal side of the tool shank 1 to a distal end of the cutting head 2. The cutting chip discharge groove 4 forms a V-shape in cross section whose opening angle from the center of the tool shank 1 and the cutting head 2 is approximately 110 to 130 degrees.

The tool shank 1 is formed by die-forming the pipe material so as to have a cross section of a two-thirds circle except for a proximal end portion side to form the cutting chip discharge groove 4 at an outer surface side. An interior space thereof constitutes a coolant supply passage 3a. Although illustration is omitted, the proximal end portion of the tool shank 1 is inserted, fitted and fixed to a large-diameter cylindrical driver in the same manner as the conventional configuration (see FIG. 6).

As shown in FIGS. 1 to 3, the cutting head 2 is formed with a cutting blade 5 of a single-edged blade bordering the cutting chip discharge groove 4 by fixing a thick-plate cutting blade tip 50, at a distal end side of a head main body 20 assuming a two-thirds circle in cross section corresponding to the tool shank 1. The cutting head 2 is also fixed with axially long semicylindrical guide pads 6 on a radially opposite side of the cutting blade 5 side on an outer circumferential surface 2c and on a back side of the cutting blade 5. In addition, the cutting blade tip 50 and the guide pad 6 are formed of a hard material such as cemented carbide, sintered ceramics, cermet, etc., fitted into recessed portions 21a, 21b provided in advance to the head main body 20 made of steel such as tool steel, and brazed by a metalizing method.

Further, two coolant circulation holes 31, 32 are formed in the interior extending from a proximal end 2a of the cutting head 2 to a lengthwise direction intermediate portion as a coolant supply passage 3b communicating with the coolant supply passage 3a of the tool shank 1. A cross-sectionally substantially semicircular coolant lead-out groove 22 extending from the lengthwise direction intermediate portion to a head distal end surface 2b is formed on the outer circumferential surface 2c at the back side relative to the cutting chip discharge groove 4 while situated between both guide pads 6. Both coolant circulation holes 31, 32 join and communicate with a coolant lead-out port 23 being open at the proximal end side of the coolant lead-out groove 22. Further, as shown in FIG. 1A, a coolant discharge port 24 located in the vicinity of an edge on the opposite side of the cutting blade 5 side of the cutting chip discharge groove 4 and communicated with one of the coolant circulation holes 32 via a small-diameter circulation hole 33 is opened at the distal end surface 2b of the cutting head 2. Furthermore, a backflow preventing protrusion 25 along a circumferential direction extending between both guide pads 6 is formed at the rear side of the coolant lead-out port 23.

The cutting blade 5 has a blade edge 51 highly inclined toward the head shaft center O side and being two-step shaped, and a stepped chip breaker 5a along the blade edge 51 at the front face side. An inner end 51a of the blade edge 51 is arranged so as to be apart by a distance s from the head shaft center O in a position where the blade edge 51 is parallel to a radial line R about the head shaft center O and also a center thereof is raised by a distance f more forward in the cutting rotation direction than the radial line R. Further, a cutting blade side face 52 at the inner end 51a side of this cutting blade 5 constitutes an inclined surface inclined from the inner end 51a to the head shaft center O side, and the surface orientation is configured at a right angle to a cutting blade front side 53.

In deep-hole drilling work by the above-described gun drill, the coolant supplied through the coolant supply passages 3a, 3b within the tool shank 1 and the cutting head 2 is sent into the cutting region continuously while the gun drill or the work material W is rotated. The coolant catches cutting chips generated in the cutting region and discharges the cutting chips outside through the cutting chip discharge groove 4. Therefore, in this embodiment, the coolant is led out mainly from the coolant lead-out port 23 provided on the outer circumferential surface 2c of the cutting head 2 to the coolant lead-out groove 22, through which the coolant is discharged to the cutting region. A residual part of the coolant passes from one of the coolant circulation holes 32 through the circulation hole 33 and is discharged from the coolant discharge port 24 at the head distal end surface 2b to the cutting region.

As described above, the inner end 51a of the blade edge 51 of the cutting blade 5 is spaced apart from the head shaft center O in this gun drill, whereby a circular non-cutting zone Z whose radius is an eccentric distance s is formed in the vicinity of the shaft center O, as shown in FIG. 3, and a non-cutting core C of a work material W is generated in this non-cutting zone Z. Since the cutting blade side face 52 at the inner end 51a side of the blade edge 51 forms an inclined surface inclined from the inner end 51a to the head shaft center O side, as shown in FIG. 4, the non-cutting core C is forcibly pushed away laterally by press-contact of the inclined cutting blade side face 52 as shown by a virtual line, and is broken off in such a manner as being twisted in line with rotation of the cutting head. The inclination of the cutting blade side face 52 increases the degree of lateral displacement from the head shaft center O as the non-cutting core C becomes longer. Therefore, the non-cutting core C is efficiently fragmented little by little without growing long, whereupon excellent cutting chip discharge performance is secured, and high cutting efficiency is attained in cooperation with an elimination of the chisel edge in the shaft center position.

Furthermore, in this embodiment, the blade edge 51 of the cutting blade 5 is arranged in a center-raised position by a distance f more forward than the radial line R about the head shaft center O, and the cutting blade side face 52 at the inner end 51a side is perpendicular to the cutting blade front face 53. Consequently, as shown in FIG. 5, an upper end edge 52a on the cutting blade side face 52 continuing from the inner end 51a of the blade edge 51 to the rearward comes to enter into the non-cutting zone Z by the shaded portion U as shown since the shortest distance d with respect to the head shaft center O becomes shorter than the eccentric distance s of the inner end 51a of the blade edge 51. Therefore, the non-cutting core C generated by the cutting by the blade edge 51 is pushed and cut from the lateral side by the shaded portion U soon after the generation, and is constricted to a circle N having a smaller radius d than the non-cutting zone Z. As a result, the non-cutting core C is further easily broken off little by little. Further, the whole of the blade edge 51 of the cutting blade 5 is highly inclined toward the head shaft center O side, so that the radial force of the cutting reaction force is directed to the opposite side of the cutting blade 5 side and acts in such a manner as pressing the guide pad 6 on the opposite side of the cutting blade 5 against an inner circumference of the cutting hole H. Thus, there is also an advantage of improving drilling accuracy of the cutting hole H.

In this gun drill, on the other hand, the cutting blade 5 is composed of the cutting blade tip 50 brazed to the recessed portion 21a provided to the cutting head 2, but the blade edge 51 of the cutting blade 5 does not need to be made in agreement with the radial line R passing through the head shaft center O. Additionally, the inner end 51a of the blade edge 51 also has only to be spaced apart from the head shaft center O appropriately, so that exact positional accuracy is not required at the time of brazing the cutting blade tip 50, which facilitates the manufacturing of the cutting head 2 accordingly. Further, as for the cutting blade tip 50 itself as well, the cutting blade side face 52 thereof has only to be a simple inclined surface, so that its manufacturing can be carried out easily at a low cost. It is noted that the gun drill of the present invention includes one in which the cutting blade 5 is integrally formed with the head main body 20, too.

An inclination angle θ of the cutting blade side face 52 at the inner end 51a side of the cutting blade 5 with respect to the head shaft center O is preferably in the range of 5 to 30 degrees. If the inclination angle θ is too small or too large, break-off performance (fragmentation performance) of the non-cutting core C becomes low. Further, the eccentric distance s of the inner end 51a of the blade edge 51 from the head shaft center O is preferably in the range of 0.05 to 0.5 mm. If too short, positioning at the time of brazing the cutting blade tip 50 becomes difficult, whereas if too long, the non-cutting core C becomes thick, which requires a large force for break-off and leads to a reduction in cutting efficiency. Furthermore, a center-raised amount of the cutting blade 5, in other words, a distance f of the blade edge 51 with respect to the radial line R about the head shaft center O is preferably in the range of 0.2 to 1.5 mm for the purpose of further ensuring the little by little break-off of the non-cutting core C.

Furthermore, the cutting blade side face 52 at the inner end 51a side of the cutting blade 5 is perpendicular to the cutting blade front face 53 in the afore-described embodiment. However, the cutting blade side face 52 has only to be in the angle range of 75 to 90 degrees with respect to the cutting blade front face 53 in the present invention. In this angle range, the lateral displacement of the non-cutting core C by press-contact of the cutting blade side face 52 becomes sufficiently large and fragmentation performance of the non-cutting core C is increased accordingly, while strength of a blade point at the inner end 51a side of the blade edge 51 is increased, so that the blade point is hard to chip, whereupon durability of the cutting blade 5 is improved.

Further, as in the gun drill of this embodiment, the cutting blade tip 50 and two guide pads 6 are brazed to the distal end side of the cutting head 2, and additionally, the opening angle of the V-shape in cross section of the cutting chip discharge groove 4 is set at 110 to 130 degrees, which is large, thereby resulting in the cross section of the thickness portion of the distal end side of the head main body 20 becoming small. As a result, the hole diameter of the inner coolant passage cannot be made large. However, if the inner coolant supply passage 3a at the head proximal end side is made to communicate with the coolant lead-out groove 22 at the outer circumferential surface side, at the head-lengthwise direction intermediate portion, and the passage cross-sectional area to the cutting region is secured large by this coolant lead-out groove 22, a sufficient amount of coolant can be supplied to the cutting region. Thus, in this embodiment, the large coolant supply amount to the cutting region is combined with the large passage cross-sectional area of the cutting chip discharge groove 4 side, whereupon excellent cutting chip discharge performance can be attained and cutting efficiency of deep-hole drilling work can be improved significantly. The backflow preventing protrusion 25 at the rear side of the coolant lead-out port 23 prevents the coolant from flowing back rearward from a gap between an inner circumference of the cutting hole H and an outer circumference of the cutting head 2, thereupon performing a function of improving coolant supply efficiency.

As described above, discharge of cutting chips is further promoted by providing the coolant discharge port 24 to the distal end surface 2b of the cutting head 2 in the gun drill of this embodiment. However, the coolant discharge port 24 at the head distal end surface 2b is not essential in the gun drill of the present invention, and is preferably omitted for securing strength of the cutting head especially when a tool diameter is small. Further, in the present invention, the upper end edge 52 on the cutting blade side face 52 at the inner end side of the cutting blade 5 enters into the non-cutting zone Z, as shown in FIG. 5, which is effective in easily breaking off the non-cutting core C further little by little as already described. However, in order to avoid an increase in cutting resistance due to push-cutting at the upper end edge 52a, the upper end edge 52a on the cutting blade side face 52 may be made round-shaped including the inner end 51a of the blade edge 51, and the entering portion (shaded portion U in FIG. 5) may not be generated. Besides, detailed configurations such as the shape of the cutting blade 5 and the cutting blade tip 50, the shape of the guide pad 6, etc., can be modified in various ways except for the embodiment in the present invention.

## Claims

1. A gun drill comprising:
a tool shank;
a cutting head mounted on a distal end portion of the tool shank;
a coolant supply passage provided inside the tool shank and the cutting head and communicating with the tool shank and the cutting head;
a coolant discharge port opened at the cutting head and communicating with the coolant supply passage;
a lengthwise direction cutting chip discharge groove formed on an outer circumferential surface extending from a proximal side of the tool shank to a cutting head distal end; and,
a cutting blade of a single-edged blade provided at the cutting head distal end and bordering the cutting chip discharge groove,
wherein the cutting blade is such that a blade edge thereof has an inner end spaced apart from a head shaft center and forming a non-cutting zone in the vicinity of the shaft center, and a cutting blade side face at an inner end side constitutes an inclined surface inclined from the inner end to a head shaft center side, and
a non-cutting core of a work material generated in the non-cutting zone is broken off by press-contact of the inclined cutting blade side face during cutting processing.

2. The gun drill according to claim 1, wherein the cutting blade has the cutting blade side face at the inner end side forming an angle of 75 to 90 degrees with respect to the cutting blade front face.

3. The gun drill according to claim 1, wherein the inner end of the blade edge is spaced 0.05 to 0.5 mm apart from the head shaft center, and an inclination angle of the cutting blade side face with respect to the head shaft center is 5 to 30 degrees.

4. The gun drill according to claim 1, wherein the blade edge of the cutting blade is arranged in parallel with a radial line about the head shaft center and in a center-raised position 0.2 to 1.5 mm more forward in a cutting rotation direction than the radial line.

5. The gun drill according to claim 1, wherein the cutting blade is composed of a cutting blade tip brazed to a recessed portion provided to the cutting head.

6. The gun drill according to claim 1, wherein a guide pad is provided in a position on the opposite side of a cutting blade side on an outer circumferential surface of the cutting head, and an entire blade edge of the cutting blade is highly inclined toward the head shaft center side.
